# DEMANDE DE BREVET EUROPEEN

(11) **EP 1 757 424 A1**
(43) Date de publication de la demande: **28.02.2007**
(21) Numéro de dépôt: 06291262.1
(22) Date de dépôt: 03.08.2006
(51) Int. Cl.: B29C 41/04, B29C 44/34, A47B 96/20, B29C 44/10

(54) **Procédé de rotomulage de pièces creuses, et ossature de structure porteuse**

(30) Priorité: 05.08.2005 FR 0508379
(71) Demandeur: Allibert-Buckhorn Europe, 92000 Nanterre (FR)
(72) Inventeur: Li, Weidong, 78480 Verneuil sur Seine (FR)
(74) Mandataire: Arnaud, Jean

(57) **Abrégé**

L'invention concerne le rotomoulage de pièces creuses, et, plus précisément, un procédé de rotomoulage de pièces creuses (10, 12) ayant une mousse de matière plastique, qui comprend une étape de formation par rotomoulage d'une couche de mousse de matière plastique, les conditions de formation de la couche de mousse assurant la formation d'une mousse à cellules en partie ouvertes et fermées ; il comprend aussi, pendant ou après l'étape de formation par rotomoulage d'une couche de mousse, une étape de soufflage d'air sous pression dans le moule, à un moment compris entre le moment d'introduction de la matière plastique de la mousse et le moment du passage de la mousse à un état stable. La pièce creuse (10, 12) peut aussi comporter une enveloppe de matière plastique non cellulaire formée par rotomoulage. Application à des panneaux de support d'étagères.

## Description

La présente invention concerne un procédé de fabrication de pièces creuses par rotomoulage, notamment d'ossatures de structures porteuses, ainsi que les ossatures obtenues.

On utilise fréquemment le procédé de rotomoulage pour la fabrication de pièces creuses, surtout de grandes dimensions, parce que l'outillage de fabrication est peu coûteux et convient donc bien à des pièces fabriquées en petites et moyennes séries. En particulier, ce procédé convient bien à des pièces de grandes dimensions telles que des bacs, des conteneurs, et même des bateaux et carrosseries de voiturettes automobiles.

Dans le procédé de rotomoulage, une poudre de polymère est placée dans un moule fermé qui est chauffé et mis en rotation autour de deux axes perpendiculaires, si bien que les particules chauffées de polymère sont agitées et se collent les unes aux autres par fusion au moins à la surface, en formant une enveloppe pratiquement non cellulaire.

On s'est rendu compte que les produits obtenus n'étaient parfois pas suffisamment résistants au point de vue mécanique. En effet, le matériau obtenu par collage et fusion éventuellement partielle des particules de polymère n'est parfois pas aussi résistant qu'un véritable matériau massif. En outre, pour des raisons de coût et de poids, on ne souhaite pas augmenter excessivement l'épaisseur de l'enveloppe.

On a donc déjà incorporé une mousse aux pièces creuses formées par rotomoulage. Dans des procédés "à reprise", une mousse est formée par moussage ultérieur, à l'intérieur de l'enveloppe obtenue, dans l'outillage de rotomoulage ou en dehors de celui-ci. On utilise alors en général une mousse d'un matériau choisi pour ses propriétés physiques, indépendamment de sa compatibilité ou non avec le matériau de l'enveloppe. On obtient une bonne résistance mécanique et une bonne planéité des pièces plates, sauf en cas de dilatation thermique. Par exemple, on a réalisé des bouées marines ayant une enveloppe de polyéthylène remplie d'une mousse de polyuréthanne. Ces pièces posent plusieurs problèmes. Un premier problème est l'absence de tenue de l'enveloppe par la mousse, si bien que, en cas de percée de l'enveloppe, la pièce présente des défauts d'aspect. En outre, les matières qui pénètrent peuvent étendre la dégradation interne de la pièce. Un autre problème est la difficulté de recyclage due à la différence de nature chimique des matériaux de l'enveloppe et de la mousse.

On s'est alors rendu compte que certains problèmes pouvaient se poser à l'interface de l'enveloppe et de la mousse, par exemple à la suite de chocs provoquant une fissure dans l'enveloppe. On a donc réalisé des pièces de grandes dimensions ayant une enveloppe non cellulaire d'une matière plastique, contenant une mousse de la même matière plastique ou d'une matière plastique compatible, dans un même outillage de rotomoulage. On a ainsi obtenu des pièces dans lesquelles la mousse est bien liée à l'enveloppe, si bien que l'apparition de fissures ne provoque pas une séparation de la mousse et de l'enveloppe.

On s'est alors rendu compte que, lorsqu'on utilisait la même matière plastique ou des matières plastiques compatibles pour former l'enveloppe et la mousse, on n'obtenait pas en général des pièces d'aspect. En effet, pendant le refroidissement des produits ainsi obtenus, le retrait des matériaux entraîne des déformations (retassures) locales ou globales, bien que ces produits puissent avoir une grande durabilité ou des propriétés mécaniques élevées.

Il existe donc un problème d'obtention par rotomoulage de structures munies d'une enveloppe et d'une mousse, constituant des pièces d'aspect et ayant une excellente résistance mécanique, surtout lorsque ces structures sont porteuses et ont une ossature qui doit pouvoir supporter des forces importantes.

Le document FR-2 134 412 décrit l'application d'une pression à une mousse en cours de formation par introduction d'un fluide gazeux dans une vessie placée dans un moule : c'est la paroi de la vessie qui exerce une pression réglable sur la mousse en cours de formation. Le moulage n'est pas effectué par rotomoulage.

L'invention concerne la solution de ce problème. Plus précisément, selon l'invention, la résistance mécanique d'une mousse, soit seule, soit d'un couple matériau non cellulaire/mousse, formés d'une même matière plastique ou de matières plastiques compatibles, est accrue par application à la mousse d'une pression au cours de l'opération de rotomoulage. Pour que la pression ait une action efficace sur la mousse, il convient que celle-ci soit formée, en partie ou en totalité, de cellules fermées. Une telle pression densifie la mousse, et, dans le cas d'un couple matériau non cellulaire/mousse, augmente la liaison de l'enveloppe (matériau non cellulaire) à la mousse.

Ainsi, selon l'invention, dans un procédé de rotomoulage qui comporte une étape de fabrication de mousse, une pression est appliquée au moins pendant une partie de l'étape de formation de mousse afin que la mousse soit comprimée, si bien qu'elle est densifiée dans toutes ses parties et présente une résistance mécanique élevée.

Grâce à ce procédé, il est possible de réaliser des pièces creuses qui ne présentent pratiquement pas de déformation au refroidissement, qui possèdent une excellente résistance mécanique, et qui peuvent constituer des pièces d'aspect.

Plus précisément, l'invention concerne un procédé de rotomoulage de pièces creuses ayant une mousse de matière plastique, du type qui comprend une étape de formation par rotomoulage d'une couche de mousse de matière plastique, les conditions de formation de la couche de mousse assurant la formation d'une mousse à cellules en partie ouvertes et fermées ; le procédé comprend selon l'invention, pendant ou après l'étape de formation par rotomoulage d'une couche de mousse, une étape de soufflage d'air sous pression dans le moule, à un moment compris entre le moment d'introduction de la matière plastique de la mousse et le moment du passage de la mousse à un état stable.

De préférence, la pièce creuse comporte une enveloppe de matière plastique non cellulaire, de préférence compatible avec celle de la mousse, et le procédé comprend, avant l'étape de formation de la mousse, une étape de formation par rotomoulage d'une enveloppe de matière plastique non cellulaire.

De préférence, le moule dans lequel sont effectuées les étapes de formation de l'enveloppe et de la mousse a des parois opposées dont des parties sont adjacentes, et le procédé comprend le réglage des quantités de matière plastique de l'enveloppe et de la couche de mousse introduites dans ce moule à des valeurs suffisant à la formation de ponts de matière plastique entre des parties adjacentes. Ces ponts peuvent être formés soit du matériau d'enveloppe, soit de mousse.

De préférence, la pression de l'air introduit est inférieure à 1 bar.

L'invention concerne aussi une ossature de structure porteuse, du type qui comprend au moins un panneau porteur creux sensiblement vertical, telle que le panneau comprend une couche de mousse interne qui est formée avec application d'une pression à la mousse en cours de formation par un procédé de rotomoulage selon l'un des paragraphes précédents.

De préférence, l'ossature comporte des ponts de matière plastique entre les deux grandes faces du panneau.

La matière plastique de l'enveloppe est de préférence une polyoléfine, par exemple du polyéthylène, et la matière plastique de la mousse est de préférence une polyoléfine, par exemple du polyéthylène.

De préférence, le panneau de l'ossature comporte, au moins à proximité d'une extrémité, une partie d'épaisseur réduite, traversée par plusieurs ouvertures.

Dans un mode de réalisation avantageux, l'ossature comprend plusieurs panneaux et plusieurs traverses, et une traverse est tenue à une extrémité par une plaque serrée contre une partie d'épaisseur réduite du panneau.

Dans un exemple, la partie d'épaisseur réduite délimite une encoche destinée à loger un pied de support, qui peut être tenu entre deux plaques et peut comporter un vérin.

D'autres caractéristiques et avantages de l'invention seront mieux compris à la lecture de la description qui va suivre d'un exemple de réalisation, faite en référence aux dessins annexés sur lesquels :
la figure 1 est une vue en perspective d'un exemple d'ossature de structure porteuse, formée par trois panneaux et des traverses ;
la figure 2 est une vue éclatée illustrant le montage d'une traverse sur un panneau d'ossature représenté sur la figure 1 ; et
la figure 3 est une vue de dessous représentant la disposition d'un pied.

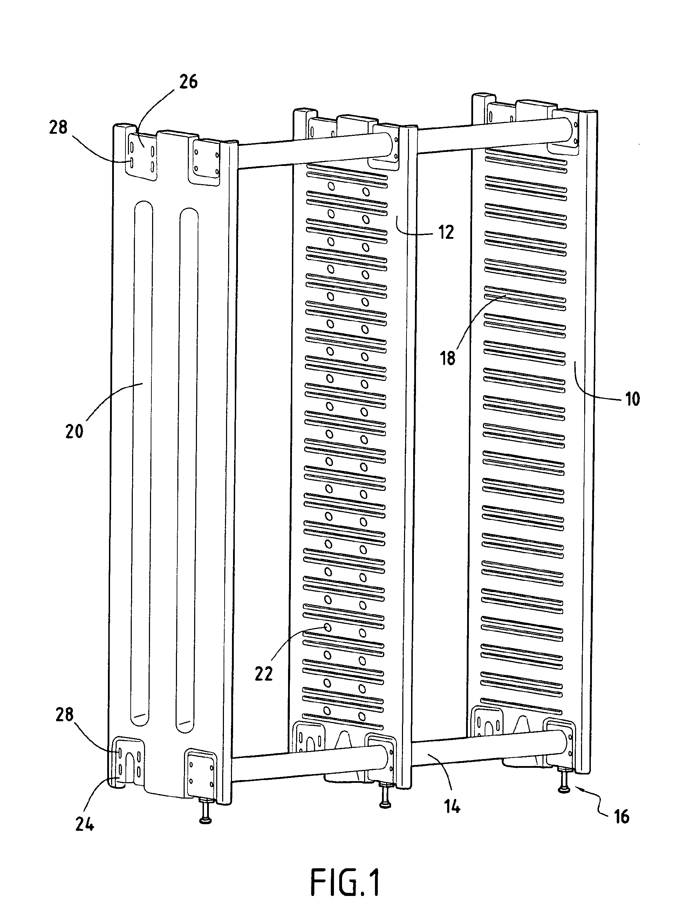

La figure 1 représente les éléments principaux de l'ossature d'une structure porteuse destinée à porter des étagères. La structure représentée comporte trois panneaux, deux panneaux 10 d'extrémité et un panneau intermédiaire 12. Ces panneaux sont reliés par des traverses inférieures et supérieures 14 (seules les traverses avant étant représentées) et sont portés par des pieds 16. Pour le logement de tablettes, ces panneaux portent des paires de saillies 18 destinées à guider et supporter des tablettes.

L'invention s'applique essentiellement à la fabrication des panneaux tels que 10, 12, ainsi qu'à leur incorporation à la structure porteuse à l'aide des traverses et surtout à la fixation des traverses sur les panneaux.

Chaque panneau 10, 12 est formé en une seule pièce dont toutes les surfaces apparentes sont non cellulaires, avantageusement formées d'une matière plastique lisse colorée. Il est essentiel que chaque panneau d'une part soit bien vertical et d'autre part ne soit pas gauchi. Enfin, il ne faut pas qu'il fasse apparaître des déformations car sa résistance mécanique pourrait être réduite.

Les panneaux 10, 12 ont donc une enveloppe continue lisse d'un matériau non cellulaire. La résistance mécanique des parois de l'enveloppe est augmentée par formation de ponts intérieurs, au niveau de cavités extérieures apparentes telles que 20 (sur les panneaux 10) et 22 (sur le panneau 12).

A l'intérieur de l'enveloppe de chacun des panneaux est disposée une mousse qui, grâce au procédé selon l'invention, adhère fermement à l'enveloppe et délimite une cavité interne. La mousse est de préférence à cellules en partie ouvertes et fermées. Au niveau des ponts formés à l'intérieur, en regard des cavités extérieures 20 et 22, le matériau est continu d'une face à l'autre, sans cavité. Cette continuité peut être obtenue uniquement avec le matériau non cellulaire, mais elle peut aussi être obtenue avec le matériau cellulaire. Ainsi, au niveau des cavités 20, 22, les deux faces extérieures de l'enveloppe sont tenues l'une par rapport à l'autre. On conçoit que les grandes faces extérieures des panneaux peuvent alors garder un bon parallélisme. Dans le cas des panneaux d'extrémité, on note que ces ponts sont allongés suivant la longueur alors que, dans les panneaux intermédiaires, ces ponts sont localisés et sont nombreux.

Pour la coopération avec les traverses, les extrémités des panneaux comprennent des zones telles que 24, 26 ayant une plus faible épaisseur. Dans ces zones 24, 26, le matériau forme aussi un pont, de préférence entièrement constitué de matériau non cellulaire, si bien que sa résistance mécanique est localement accrue. Des trous 28 traversent ces parties renforcées 24, 26 de plus faible épaisseur.

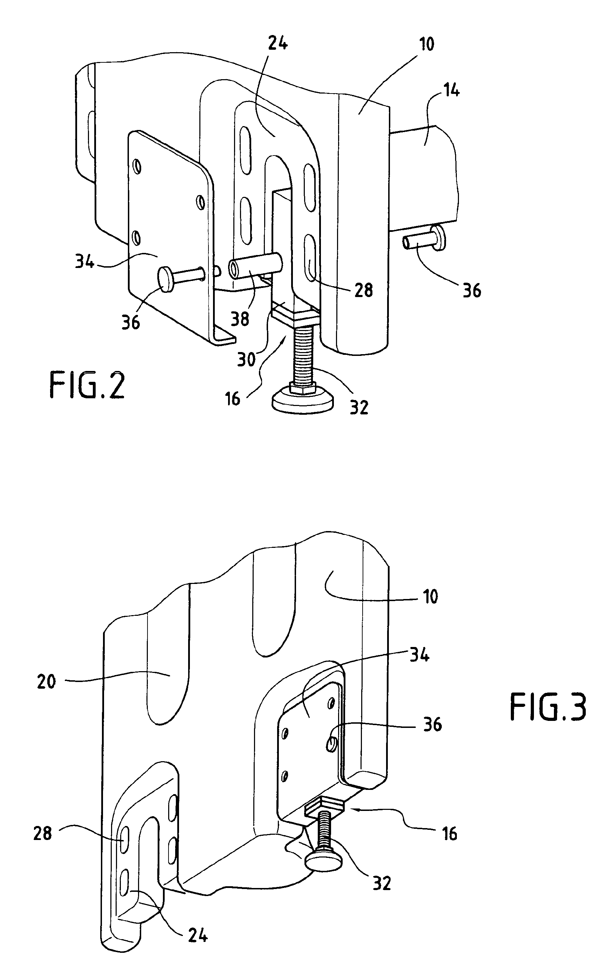

Les figures 2 et 3 montrent comment ces parties 24, 26 sont utilisées. On se réfère à la partie inférieure 24 qui a un évidement central destiné au logement d'un pied, la description s'appliquant aussi à la partie supérieure qui est plus simple puisqu'elle n'a pas à comprendre un pied.

On note sur les figures 2 et 3 que la partie amincie 24, qui est plus robuste dans la direction de l'épaisseur que le reste du panneau, est destinée à loger le corps 30 d'un pied qui possède aussi une tige filetée 32 qui se visse dans le corps 30 pour former un vérin. Le corps 30 s'ajuste dans la cavité de la partie amincie 24, à la fois dans le sens avant-arrière, et dans la direction de l'épaisseur du panneau, l'épaisseur du pied dans cette direction étant pratiquement égale à l'épaisseur de la partie 24 de préférence.

Le pied est tenu par serrage de deux plaques latérales 34, dont l'une est solidaire de l'extrémité d'une traverse 14, qui sont fixées l'une à l'autre par des dispositifs de fixation 36, représentés sous forme de vis, qui coopèrent avec des manchons taraudés 38 passant dans les trous 28. Ainsi, les deux plaques 34 sont serrées l'une contre l'autre et autour du pied 16. Le corps 30 du pied est donc serré entre les deux plaques 34 qui sont elles-mêmes serrées contre les faces de la partie amincie 24. Les deux plaques 34 et le corps 36 du pied forment donc un ensemble rigide solidaire de la traverse 14. En conséquence, la partie amincie 24 du panneau ne travaille pas uniquement par ses parois extérieures, mais est impliquée globalement dans toute sa masse par sa retenue dans la cage formée par les deux plaques 34. Cette coopération est très efficace parce que la surface de contact des plaques et de la partie amincie 24 est étendue.

A la partie supérieure du panneau, le montage est analogue, mais ne comprend pas de pied.

La description qui précède montre que chacun des panneaux 10, 12 non seulement doit avoir une grande résistance mécanique, mais encore ne doit pas se déformer, notamment pour que la coopération des panneaux assurée par les traverses soit reproductible.

On décrit maintenant le procédé de fabrication d'un tel panneau. Le moule utilisé est de type classique, formé par exemple par chaudronnage de tôle. Il est placé dans une machine de rotomoulage habituelle et une extrémité au moins du moule a un orifice permettant l'introduction des matières.

Dans une première étape, une première poudre de polyéthylène est placée dans le moule et celui-ci subit un premier cycle de fabrication de l'enveloppe. La quantité de poudre du polymère et la durée du cycle sont suffisantes pour l'obtention d'une enveloppe de quelques millimètres d'épaisseur.

Ensuite, une poudre de polyéthylène associée à un agent porogène est introduite dans le moule qui continue à subir ses rotations autour de deux axes. Le matériau commence donc à former une mousse qui vient s'appliquer contre l'enveloppe et qui se fixe sur celle-ci grâce à la compatibilité chimique des matériaux. Dès l'introduction de la poudre polymère contenant l'agent porogène ou ultérieurement, de l'air à une pression de quelques dizaines ou centaines de millibars est introduit dans le moule de rotomoulage. Grâce à la structure de la mousse à cellules en partie ouvertes et fermées, la pression peut s'exercer sur toute la mousse par action sur les cellules fermées qui agissent alors sur les cellules ouvertes. De cette manière, la mousse qui se forme peut être appliquée contre l'enveloppe et former une couche régulière convenablement densifiée.

Bien entendu, la pression appliquée doit être modérée, d'un bar au plus, car les moules de rotomoulage ne sont pas aptes à supporter des pressions internes importantes. La pression est de préférence maintenue pendant la partie de refroidissement du cycle de fabrication.

Bien qu'on ait décrit la fabrication de panneaux de polyéthylène, d'autres matières plastiques peuvent être utilisées. Il est même possible, parmi les polyoléfines, d'utiliser du polypropylène, bien que celui-ci pose des problèmes de fabrication à cause de l'étroitesse de la plage de températures dans laquelle il est possible de réaliser les opérations.

Bien qu'on ait indiqué que l'air était introduit dès la formation de la mousse thermoplastique, cette introduction peut être réalisée aussi postérieurement, du moment que la matière plastique de la mousse est encore à un état déformable. Dans ce cas, la pression n'exerce qu'un effet de densification.

Bien qu'on ait décrit des panneaux comprenant une enveloppe et une mousse, le procédé de l'invention se prête aussi à la formation de pièces creuses uniquement formées de mousse à cellules ouvertes. Dans ce cas, la densification de la mousse obtenue par l'application de la pression d'air est particulièrement avantageuse pour l'obtention d'une résistance mécanique suffisante.

## Revendications

1. Procédé de rotomoulage de pièces creuses ayant une mousse de matière plastique, du type qui comprend :
une étape de formation par rotomoulage d'une couche de mousse de matière plastique, les conditions de formation de la couche de mousse assurant la formation d'une mousse à cellules en partie ouvertes et fermées,
**caractérisé en ce qu'**il comprend, pendant ou après l'étape de formation par rotomoulage d'une couche de mousse, une étape de soufflage d'air sous pression dans le moule, à un moment compris entre le moment d'introduction de la matière plastique de la mousse et le moment du passage de la mousse à un état stable.

2. Procédé selon la revendication 1, **caractérisé en ce que** la pièce creuse comporte une enveloppe de matière plastique non cellulaire, et le procédé comprend, avant l'étape de formation de la mousse, une étape de formation par rotomoulage d'une enveloppe de matière plastique non cellulaire.

3. Procédé selon la revendication 2, dans lequel le moule dans lequel sont effectuées les étapes de formation de l'enveloppe et de la mousse a des parois opposées dont des parties sont adjacentes, **caractérisé en ce que** le procédé comprend le réglage des quantités de matière plastique de l'enveloppe et de la couche de mousse introduites dans ce moule à des valeurs suffisant pour la formation de ponts de matière plastique entre des parties adjacentes.

4. Procédé selon l'une quelconque des revendications précédentes, **caractérisé en ce que** la pression de l'air introduit est inférieure à 1 bar.

5. Ossature de structure porteuse, du type qui comprend au moins un panneau porteur creux (10, 12) sensiblement vertical, **caractérisée en ce que** le panneau (10, 12) comprend une couche de mousse interne qui est formée avec application d'une pression à la mousse en cours de formation par un procédé de rotomoulage selon l'une quelconque des revendications précédentes.

6. Ossature selon la revendication 5, **caractérisée en ce qu'**elle comporte des ponts de matière plastique entre les deux grandes faces du panneau.

7. Ossature selon l'une des revendications 5 et 6, **caractérisée en ce que** la matière plastique de l'enveloppe est une polyoléfine, de préférence du polyéthylène.

8. Ossature selon l'une quelconque des revendications 5 à 7, **caractérisée en ce que** la matière plastique de la mousse est une polyoléfine, de préférence du polyéthylène.

9. Ossature selon l'une quelconque des revendications 5 à 8, **caractérisée en ce que** le panneau (10, 12) de l'ossature comporte, au moins à proximité d'une extrémité, une partie (24, 26) d'épaisseur réduite, traversée par plusieurs ouvertures (28).

10. Ossature selon l'une quelconque des revendications 5 à 9, **caractérisée en ce que** l'ossature comporte une traverse (14) tenue à une extrémité par une plaque (34) serrée contre la partie (24, 26) d'épaisseur réduite d'un panneau qui délimite une encoche destinée à loger un pied (16) de support qui est tenu entre deux plaques (34).
